# EUROPEAN PATENT SPECIFICATION

(11) **EP 0 576 063 B1**
(45) Date of publication and mention of the grant of the patent: **22.05.1996**
(21) Application number: 93201659.5
(22) Date of filing: 10.06.1993
(51) Int. Cl.: B09B 3/00

(54) **Method for treating soil contaminated with hydrocarbons**
Verfahren zur Behandlung von mit Kohlenwasserstoffen verunreinigtem Boden
Procédé de traitement du sol contaminé par les hydrocarbures

(30) Priority: 22.06.1992 ID 338192
(43) Date of publication of application: 29.12.1993
(73) Proprietor: Tischler, Siegfried Emanuel, Dr., Kuningan, Jakarta (ID); PT. LIMBAHASHRI SAKTI BUANA, Jakarta 12790 (ID)
(72) Inventor: Tischler, Siegfried Emanuel, Dr., Kuningan, Jakarta (ID)
(74) Representative: Donné, Eddy

(56) References cited:
- WO-A-91/13698
- US-A- 5 118 629
- US-A- 5 164 158
- US-A- 5 170 726

## Description

### Background of the invention.

This invention relates to a method for treating soil contaminated with organic materials, particularly hydrocarbons, comprising heating the contaminated soil in an oxidizing atmosphere to produce a mixture of treated solids and process gas and separating the treated solids from the process gas.

Growing environmental awareness has caused recognition of the potential environmental and health hazards associated with soil that has become contaminated with hydrocarbons. Tanks for storing hydrocarbons such as crude oil or products such as gasoline or diesel sometimes develop leaks resulting in discharge of a portion of their contents into the surrounding soil. Over time the hydrocarbons can accumulate in the soil eventually causing contamination of nearby water supplies.

A method for treating contaminated soil of the above mentioned kind is disclosed in WO-A-91/13698. According to this method, hydrocarbon-contaminated soil is first exposed to an open flame in a confined zone and heated therein in an oxidizing atmosphere to a temperature between 190 and 399°C to drive off as vapors a substantiel percentage of the hydrocarbon, after which the hot gases containing the hydrocarbon vapors are cooled in a second zone in order to condense the hydrocarbon vapors.

An inexpensive way for decontaminating contaminated soil is desirable. It is preferred that the equipment for decontaminating such soil be somewhat portable so that it can be taken to the site of contamination avoiding the relatively expensive process of moving large quantities of soil to a central processing facility.

### Summary of the invention.

According to the invention, the contaminated soil is strained through a rotary air lock and introduced in a fluid bed oxidizer where the heating in an oxidising atmosphere takes place; a primary air stream is indirectly preheated in a preheating assembly and introduced in the fluid bed oxidizer; and a stream of secondary air is introduced in the fluid bed oxidiser; the temperature, pressure and residence time of the soil in the oxidizer being sufficient to oxidize the organic materials.

The temperature of the hot gas stream should be sufficient to cause spontaneous combustion of the light hydrocarbons from the soil immediately upon contact with the hot gas stream. The gas stream is also performing pneumatic conveying through the assembly. The heat generated by the exothermic combustion reaction causes the vaporisation and combustion of the rest of the hydrocarbons present in the contaminated soil, leading to flash oxidation.

The hot gas stream (primary air) is preferably provided by an air blower. A part of the blown air is indirectly heated in a suitable assembly and introduced into the oxidiser. The rest of the air (secondary air) is ducted into a concentrical outer cylinder around the oxidiser. Through a plurality of perforations the secondary air enters the oxidiser chamber to provide insulation of the oxidiser wall from both heat and abrasion.

The soil is introduced into the stream of primary air prior to it entering the preheating assembly; it is introduced as relatively small particles by straining it through a rotary air-lock.

The secondary air is introduced tangentially into the outer cylinders; as it enters the oxidiser through perforations in its wall, it keeps the soil and hot gas mixture in a fluidized state. The oxidiser is in five stages with increasing diameter. This maintains the speed practically constant by balancing the ever increasing gas volume. Turbulent conditions of the fluid phase are created by the tangential introduction of secondary air and by the non-linear adjustment for increased gas volume.

The product of the oxidiser is a gas-solid mixture of treated soil and process gas comprising the excess of hot gas and combustion products. The gas-solid mixture is conveyed to means for separating the decontaminated soil from the process gas. Preferably one or more cyclone separators are used for this separation step. The process gas from the cyclone separator can be further treated by conventional means to remove air pollutants that might be present.

The temperature and pressure of the oxidiser chamber are controlled by varying the speed of the air-blower and variation of the thermal energy introduced in the preheating assembly. Temperature can be further controlled by controlling the amount of secondary air. The fluidized bed oxidiser is preferably arranged with an adjustable inclination so that the residence time can be controlled by adjusting the inclination.

### Brief Description of the Drawings

The features of the specific embodiment of the invention are illustrated in the drawings wherein:
Fig.1 is a schematic block diagram illustrating the process of the invention; and
Fig.2 is a plan view in section of a stage of the fluidized bed oxidizer.

### Detailed Description

The present invention relates to a method for decontaminating sand, soil or other solids contaminated with organic materials such as hydrocarbons, by incinerating the contaminants in a fluidized bed oxidizer. While the method presented is useful for treating virtually any noncombustible solid, the description of the method is directed to the decontamination of soil in order to simplify the discussion. However, it should be recognized that the term soil is to be broadly understood to include other noncombustible solids as well, as long as the maximum grain diameter is 1 mm.

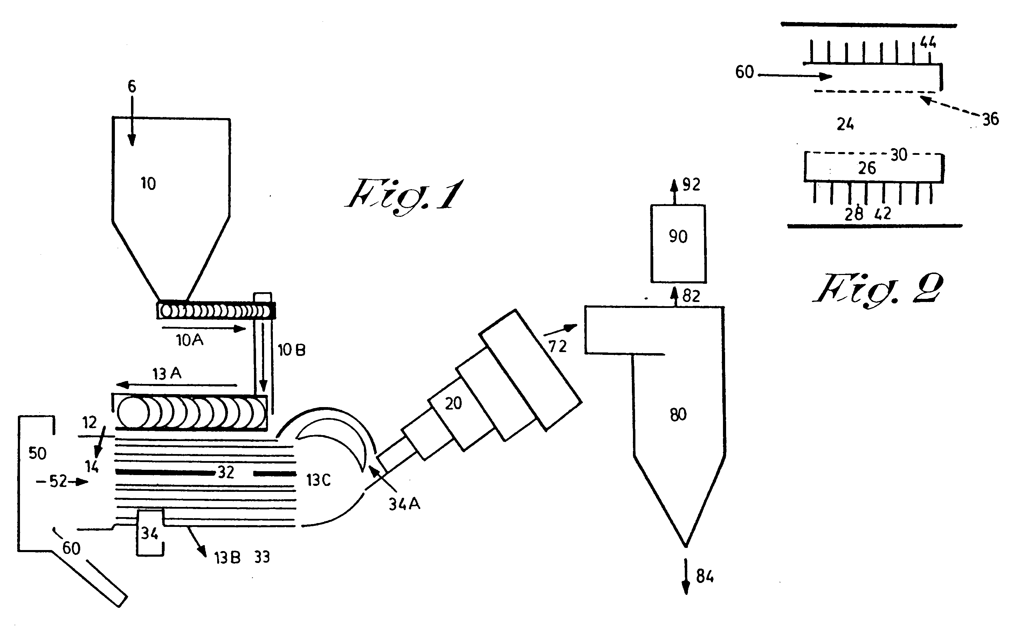

Referring to Fig.1, soil 6 contaminated with hydrocarbons is introduced to an inverted conical hopper 10 which feeds strained soil 12 to a fluidized bed oxidizer 20. The soil 6 is strained by forcing it through a rotary air lock 14 located below the delivery from a trommel/mixer/homogeniser 13A. The hopper is preferably capable of holding up to about ten metric tons of contaminated soil. A screw conveyor 10A is extracting a measured portion of soil 6 from said hopper 10 and delivering it to a conveyor belt 10B, which transports the soil to the trommel 13A The weight of the soil causes it to be strained through the rotary air lock 14 to create small particles about one millimeter in diameter. The rotary air lock may be a perforated plate having a plurality of holes, each about five millimeters in diameter.

From the air lock the soil 12 drops into the preheating assembly 13B and is pneumatically conveyed into the preoxidizer chamber 13C of the fluidized bed oxidizer.

In the preferred embodiment, as shown in Fig.1, primary and secondary air are provided by means of an air-blower 50 producing a high volume of air 52. Ducts 60 are connected to the air-blower circumference to provide for secondary air.

In the preheating assembly 13B, the primary air is preheated to a temperature in excess of the Flash Point of the hydrocarbons by way of indirect heating within metal pipes 32. These pipes are situated within a containment area 33 into which burners 34 deliver heat. In the aerodynamically shaped pre-oxidizer chamber 13C the preheated fluid phase is undergoing turbulent motion to assure homogenisation and good mixing of the gaseous/solid phase. The flue gas is drawn from this containment area and conducted to a venturi nozzle 34A after which the flue-gas is admixed to primary air to provide a temperature booster and provide for spontaneous combustion within the oxidiser chamber of the fluidized bed oxidizer. Sufficient oxygen and temperature levels should be maintained in the oxidizer chamber to cause the lighter hydrocarbons present to spontaneously ignite. Oxygen and temperature levels are controlled by the air-blower speed setting and the amount of thermal energy introduced into the preheating assembly by the burners 34. The heat generated by this exothermic combustion propagates through the fluidized bed to vaporize and burn the other heavier hydrocarbons present in the contaminated soil by way of flash oxidation.

Referring to Fig.2, the fluidized bed oxidiser comprises three concentrically arranged hollow cylinders: an inner cylinder 24, an intermediate cylinder 26 and an outer cylinder 28. The fluidized bed oxidizer is arranged in an inclined configuration so that the flow through the oxidizer chamber proceeds in at least a partially upward direction.

The inner cylinder 24 of the fluidized bed oxidizer forms the oxidizer chamber. This cylinder is approximately seven meters in length and consist of five successively larger dimensioned stages. The diameter increase from stage to stage is governed by the overall size of the unit. It takes into account the increased volume of fluid phase in the oxidizer chamber and is aimed at keeping the overall speed of the process practically constant. The speed variations within each individual stage as well as the tangential nature of introduction of secondary air will assist in keeping conditions of the fluid bed turbulent-assisting in thorough mixing of gaseous- and solid components and propagation of the combustion process from light to heavy hydrocarbons phases. The residence time of the fluid phase within the oxidizer can be controlled by varying the speed of the air-blower and the inclination of the fluidized bed oxidizer.

The oxidiser chamber is surrounded by the intermediate cylinder 26 from which it is separated by a perforated plate 30. Through the holes 36 secondary air is drawn from an annular space defined by the walls of the inner- and intermediate cylinders,according to the BERNOULLI LAW - into the oxidizer chamber. In this way the wall of the oxidiser chamber is insulated from both the temperature of the fluid phase as well as the abrasive action of the pneumatically conveyed soil particles. The introduction of secondary air serves further to provide additional oxygen for oxidation as well as to generate a turbulent flow. Speed increase caused by the gas-volume increase within the constant containment volume is balanced by the speed decrease, as the fluid phase enters the next (larger) stage of the oxidizer chamber. As such variability occurs in five steps, turbulent conditions prevail throughout the residence of the fluid phase within the oxidizer chamber.

An outer cylinder 28 surrounds the intermediate cylinder forming a second annular space defined by the intermediate and outer cylinders that acts as a cooling gas chamber 42. Cooling gas channeled through the cooling gas chamber is used to remove a portion of the heat generated by the exothermic combustion reaction in the oxidizer chamber. To better improve the heat transfer, the intermediate cylinder includes external radial cooling ribs 44 that are spaced along its length and that extend outward from the intermediate cylinder approximately 0,5 meters into the second annular opening.

The oxidation of the organic material in the contaminated soil produces a gas-solid mixture 72, containing treated soil, an excess of hot gas and combustion products. Most of the oxidation products are gases such as carbon dioxide, water vapour, but some solids such as ash may be present. Operation of prototypes has shown, that there is little - if any - ash presents. This points to total oxidation; hence the production of any monoxides is theoretically not possible. As the maximum temperature reached in trials was well below 1000°C it can be safely predicted, that no oxides of nitrogen are produced in the process. Depending on the presence of sulfur compounds within the hydrocarbons, the formation of oxides of sulfur has to be expected. In trial runs, such sulfur compounds were extracted by way of admixture of finely ground lime to the feed- leading to instantaneous generation of anhydrite/gypsum. The solid- gas mixture is directed to a gas-solid separator 80 containing the gaseous components indicated above and a treated solid stream 84 containing treated soil and possibly some ash.

In the preferred embodiment, a cyclone separator is used to perform this separation step. Cyclone separators are generally known and include a cylindrical chamber into which the gas-solid mixture is tangentially directed causing a vortex flow, whereby the inertia of the solid particles directs them to the walls of the chamber by centrifugal acceleration. Upon contact with the wall the solids drop to the bottom of the cyclone separator by gravity. In the preferred embodiment, the cyclone separator 80 is lined with ceramic material to improve its abrasion resistance. A valve at the bottom of the cyclone separator is used to maintain a level of solid particles and to control flow of solids.

While a single cyclone separator is described, it is clear that multiple separators may be used to improve the gas-solid separation. If multiple separators are used, they can be arranged in series, parallel or some combination of the two.

The process gas 82 leaving the top of the cyclone separator can be vented to atmosphere. However, if significant levels of polluting materials are present in the process gas, it can be further treated such as by gas scrubbing or selective catalytic reduction in process gas treater 90. Treated process gas 92 can be vented to atmosphere. It is also possible to recover waste heat from the discharge of process gas by using a heat exchanger to preheat air that is fed to the oxidizer.

Because of its simple and compact design, the equipment used in practising the present invention can be easily mounted on a flat bed truck, rail car, ship or barge so that the process can be somewhat portable and may be taken to the source of contamination. As the transportation of large quantities of soil to a central processing facility can be quite costly, this process can significantly reduce the treatment costs associated with soil remediation.

Once the soil has been treated by the process of the invention, it can be safely used as fill or otherwise disposed without environmental risk. If the equipment is portable, the contaminated soil can be collected, treated and replaced at the same location.

The embodiments described for the process of the present invention are illustrative and are not to be limiting. The scope of the invention is defined in the following claims.

## Claims

1. Method for treating soil contaminated with organic materials, particularly hydrocarbons, comprising heating the contaminated soil in an oxidizing atmosphere to produce a mixture of treated solids and process gas and separating the treated solids from the process gas, characterized in that the contaminated soil is strained through a rotary air lock (14) and introduced in a fluid bed oxidizer (20) where the heating in an oxidizing atmosphere takes place; a primary air stream is indirectly preheated in a preheating assembly (13B) and introduced in the fluid bed oxidizer (20); and a stream of secondary air is introduced in the fluid bed oxidizer (20); the temperature, pressure and residence time of the soil in the oxidizer (20) being sufficient to oxidize the organic materials.

2. Method according to claim 1, characterized in that the treated solids are separated from the process gas in a cyclone separator (80).

3. Method according to claim 1, characterized in that the treated solids are separated from the process gas in multiple stages of cyclone separators.

4. Method according to any one of claims 1 to 3, characterized in that the contaminated soil is introduced in the rotary lock (14) via a hopper (10) and a conveyor (10A;10B).

5. Method according to any one of claims 1 to 4, characterized in that the primary air is introduced in the fluid bed oxidizer (20) by means of an air-blower (50) blowing air through the preheating assembly (13B).

6. Method according to any one of claims 1 to 5, characterized in that an inclined fluid bed oxidizer (20) is used, whereby the preheated primary air and the strained soil (12) are introduced at the lower end of the oxidizer from the upper end of the preoxidizer (13C).

7. Method according to claim 6, characterized in that the inclination of the fluid bed oxidizer (20) is varied for controlling the residence time.

8. Method according to any one of claims 1 to 7, characterized in that a fluid bed oxidizer (20) is used having concentrically arranged cylinders (24,26,28), the inner cylinder (24) being perforated and forming the oxidizer chamber, the secondary air being introduced in the fluid bed oxidizer (20) through the perforated inner cylinder (24) in order to maintain the bed fluidized and to insulate the oxidizer wall from heat and abrasion.

9. Method according to claim 8, characterized in that the secondary air is passed between the inner cylinder (24) and a concentrically arranged cylinder (26) and introduced into the oxidizer chamber through the perforations of the inner cylinder (24) for forming a fluidized mixture with the mixture of soil and primary air.

10. Method according to any one of claims 1 to 9, characterized in that, after separation of the process gas (82) and the treated solids (84), the process gas (80) is further treated to remove polluting materials.

11. Method according to any one of claims 1 to 10, characterized in that the oxidation in the fluid bed oxidizer (20) is controlled by varying the quantity of primary and secondary air introduced.

## Patentansprüche

1. Verfahren zur Behandlung von mit organischen Materialien, insbesondere Kohlenwasserstoffen, verunreinigtem Boden, umfassend das Erhitzen des verunreinigten Bodens in einer oxidierenden Atmosphäre zur Produktion einer Mischung von behandelten Feststoffen und Prozeßgas und das Trennen der behandelten Feststoffe vom Prozeßgas, dadurch gekennzeichnet, daß der verunreinigte Boden durch eine rotierbare Luftschleuse (14) getrieben und in eine Wirbelbett-Oxidationsvorrichtung (20) eingebracht wird, worin das Erhitzen in einer oxidierenden Atmosphäre stattfindet; ein Primär-Luftstrom in einer Vorheizanlage (13B) indirekt vorgeheizt wird und in die Wirbelbett-Oxidationsvorrichtung (20) gebracht wird; und ein Strom von Sekundärluft in die Wirbelbett-Oxidationsvorrichtung (20) eingebracht wird; wobei Temperatur, Druck und Verweildauer des Bodens in der Oxidationsvorrichtung (20) ausreichend sind zum Oxidieren der organischen Materialien.

2. Verfahren gemäß Anspruch 1, dadurch gekennzeichnet, daß die behandelten Feststoffe in einem Zyklonabscheider (80) vom Prozeßgas getrennt werden.

3. Verfahren gemäß Anspruch 1, dadurch gekennzeichnet, daß die behandelten Feststoffe in mehreren Stufen von Zyklonabscheidern vom Prozeßgas getrennt werden.

4. Verfahren gemäß einem der Ansprüche 1 bis 3, dadurch gekennzeichnet, daß der verunreinigte Boden über einen Bunker (10) und ein Förderband (10A;10B) in die rotierbare Schleuse (14) eingebracht wird.

5. Verfahren gemäß einem der Ansprüche 1 bis 4, dadurch gekennzeichnet, daß die Primärluft mittels eines Luftgebläses (50), das Luft durch die Vorheizanlage (13B) bläst, in die Wirbelbett-Oxidationsvorrichtung (20) eingebracht wird.

6. Verfahren gemäß einem der Ansprüche 1 bis 5, dadurch gekennzeichnet, daß eine schräggestellte Wirbelbett-Oxidationsvorrichtung (20) verwendet wird, wobei die vorgeheizte Primärluft und der zerkleinerte Boden (12) vom oberen Ende der Voroxidations-Vorrichtung (13C) in das untere Ende der Oxidationsvorrichtung eingebracht werden.

7. Verfahren gemäß Anspruch 6, dadurch gekennzeichnet, daß die Schrägstellung der Wirbelbett-Vorrichtung (20) zur Steuerung der Verweildauer variiert wird.

8. Verfahren gemäß einem der Ansprüche 1 bis 7, dadurch gekennzeichnet, daß eine Wirbelbett-Oxidationsvorrichtung (20) verwendet wird, die konzentrisch angeordnete Zylinder (24,26,28) aufweist, wobei der innere Zylinder (24) perforiert ist und die Oxidationskammer bildet, wobei die Sekundärluft durch den perforierten inneren Zylinder (24) in die Wirbelbett-Oxidationsvorrichtung (20) eingebracht wird, um das Verwirbeln des Betts aufrechtzuerhalten und die Wand der Oxidationsvorrichtung vor Hitze und Abrasion zu isolieren.

9. Verfahren gemäß Anspruch 8, dadurch gekennzeichnet, daß die Sekundärluft zwischen dem inneren Zylinder (24) und einem konzentrisch angeordneten Zylinder (26) hindurchgeleitet und durch die Perforationen des inneren Zylinders (24) in die Oxidationskammer eingebracht wird, um eine verwirbelte Mischung mit der Mischung von Boden und Primärluft zu bilden.

10. Verfahren gemäß einem der Ansprüche 1 bis 9, dadurch gekennzeichnet, daß, nach dem Trennen des Prozeßgases (82) von den behandelten Feststoffen (84), das Prozeßgas (80) zum Entfernen verunreinigender Materialien weiterbehandelt wird.

11. Verfahren gemäß einem der Ansprüche 1 bis 10, dadurch gekennzeichnet, daß die Oxidation der Wirbelbett-Oxidationsvorrichtung (20) durch Veränderung der eingebrachten Primär- und Sekundärluftmenge gesteuert wird.

## Revendications

1. Procédé pour traiter du sol contaminé par des matières organiques, en particulier des hydrocarbures, comprenant le fait de chauffer le sol contaminé dans une atmosphère oxydante pour produire un mélange de produits solides traités et de gaz de traitement, et le fait de séparer les produits solides traités du gaz de traitement, caractérisé en ce que le sol contaminé est entraîné à travers un sas à air rotatif (14) et introduit dans un dispositif d'oxydation (20) à lit fluidisé où a lieu le chauffage dans une atmosphère oxydante; un courant d'air primaire est soumis à un préchauffage indirect dans un assemblage de préchauffage (13B) et introduit dans le dispositif d'oxydation (20) à lit fluidisé; et un courant d'air secondaire est introduit dans le dispositif d'oxydation (20) à lit fluidisé; la température, la pression et le temps de séjour du sol dans le dispositif d'oxydation (20) étant suffisants pour oxyder les matières organiques.

2. Procédé selon la revendication 1, caractérisé en ce que les produits solides traités sont séparés du gaz de traitement dans un séparateur à cyclone (80).

3. Procédé selon la revendication 1, caractérisé en ce que les produits solides traités sont séparés du gaz de traitement dans plusieurs étages de séparateurs à cyclones.

4. Procédé selon l'une quelconque des revendications 1 à 3, caractérisé en ce que le sol contaminé est introduit dans le sas rotatif (14) via une trémie (10) et via un transporteur (10A; 10B).

5. Procédé selon l'une quelconque des revendications 1 à 4, caractérisé en ce que l'air primaire est introduit dans le dispositif d'oxydation (20) à lit fluidisé au moyen d'une soufflerie d'air (50) soufflant de l'air à travers l'assemblage de préchauffage (13B).

6. Procédé selon l'une quelconque des revendications 1 à 5, caractérisé en ce qu'on utilise un dispositif d'oxydation incliné (20) à lit fluidisé, par lequel l'air primaire préchauffé et le sol entraîné (12) sont introduits à l'extrémité inférieure du dispositif d'oxydation à partir de l'extrémité supérieure du dispositif de préoxydation (13C).

7. Procédé selon la revendication 6, caractérisé en ce qu'on fait varier l'inclinaison du dispositif d'oxydation (20) à lit fluidisé pour contrôler le temps de séjour.

8. Procédé selon l'une quelconque des revendications 1 à 7, caractérisé en ce qu'on utilise un dispositif d'oxydation (20) à lit fluidisé possédant des cylindres (24, 26, 28) arrangés de manière concentrique, le cylindre interne (24) étant perforé et formant la chambre d'oxydation, l'air secondaire étant introduit dans le dispositif d'oxydation (20) à lit fluidisé à travers le cylindre interne perforé (24) dans le but de maintenir le lit fluidisé et d'isoler la paroi du dispositif d'oxydation contre la chaleur et l'abrasion.

9. Procédé selon la revendication 8, caractérisé en ce qu'on fait passer l'air secondaire entre le cylindre interne (24) et un cylindre (26) arrangé de manière concentrique, et on l'introduit dans la chambre d'oxydation à travers les perforations pratiquées dans le cylindre interne (24) pour former un mélange fluidisé avec le mélange de sol et d'air primaire.

10. Procédé selon l'une quelconque des revendications 1 à 9, caractérisé en ce que, après séparation du gaz de traitement (82) et des produits solides traités (84), le gaz de traitement (80) est soumis à un traitement ultérieur pour éliminer les matières polluantes.

11. Procédé selon l'une quelconque des revendications 1 à 10, caractérisé en ce que l'oxydation dans le dispositif d'oxydation (20) à lit fluidisé est contrôlée en faisant varier la quantité d'air primaire et d'air secondaire introduits.
